(19) Europäisches Patentamt / European Patent Office / Office européen des brevets

(11) **EP 2 526 390 B1**

(12) **FASCICULE DE BREVET EUROPEEN**

(45) Date de publication et mention
de la délivrance du brevet:
**16.10.2013 Bulletin 2013/42**

(51) Int Cl.:
***G01H 3/08*** *(2006.01)*       ***G01M 15/12*** *(2006.01)*
***G01H 3/10*** *(2006.01)*

(21) Numéro de dépôt: **11705919.6**

(86) Numéro de dépôt international:
**PCT/FR2011/050118**

(22) Date de dépôt: **21.01.2011**

(87) Numéro de publication internationale:
**WO 2011/089365 (28.07.2011 Gazette 2011/30)**

(54) **PROCEDE ET DISPOSITIF DE MESURE D'UNE PSEUDO-SIRENE MODULEE, PROCEDE DE CONSTRUCTION D'UN INDICATEUR ET VEHICULE EQUIPE DE CE DISPOSITIF**

VERFAHREN UND VORRICHTUNG ZUR MESSUNG EINER MODULIERTEN PSEUDOSIRENE, VERFAHREN ZUR KONSTRUKTION EINES INDIKATORS UND MIT DIESER VORRICHTUNG AUSGESTATTETES FAHRZEUG

METHOD AND DEVICE FOR MEASURING A MODULATED PSEUDO-SIREN, METHOD FOR CONSTRUCTING AN INDICATOR AND VEHICLE PROVIDED WITH SAID DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.01.2010 FR 1050393**

(43) Date de publication de la demande:
**28.11.2012 Bulletin 2012/48**

(73) Titulaire: **Peugeot Citroën Automobiles SA**
**78140 Vélizy Villacoublay (FR)**

(72) Inventeur: **RAGUENET, Wilfrid**
**F-78700 Conflans-Sainte-Honorine (FR)**

(74) Mandataire: **Renous Chan, Véronique**
**Peugeot Citroen Automobiles SA**
**Propriété Industrielle - LG081**
**18 rue des Fauvelles**
**92250 La Garenne Colombes (FR)**

(56) Documents cités:
**WO-A2-2007/062447       DE-A1- 4 219 372**
**DE-A1-102008 027 016    US-A- 4 550 604**

**Description**

La présente invention revendique la priorité de la demande française 1050393 déposée le 21 janvier 2010.

L'invention concerne un procédé et un dispositif de mesure d'une pseudosirène modulée générée dans une plage réduite de fréquences par un organe rotatif entraîné en rotation par un moteur thermique à combustion interne. L'invention concerne également un procédé de construction d'un indicateur de présence de la pseudo-sirène modulée ainsi qu'un véhicule incorporant le dispositif de mesure.

Le document DE 10 2008 027 016 A1 divulgue un procédé d'analyse d'un bruit. Le procédé comporte la détermination de plusieurs spectres de fréquences de modulation à partir d'une forme d'onde d'un signal mesuré de bruit de structure et / ou aérien, en utilisant une transformation de Fourier. Paramètres caractéristiques sont calculées à partir des spectres de fréquences de modulation.

Une sirène modulée ou « goose noise » est un bruit qui croit en fonction de la vitesse de rotation de l'organe qui le génère. Ce bruit est en plus modulé en phase et/ou en amplitude.

Une pseudo-sirène modulée est une sirène modulée qui n'apparaît que dans une plage réduite de vitesses de rotation de l'organe.

La mesure de cette pseudo-sirène modulée n'est pas facile car elle est présente dans un milieu particulièrement bruyant à cause de la présence du moteur thermique. Dans ces conditions, la pseudo-sirène modulée est susceptible d'être masquée par d'autres bruits ce qui rend sa perception par des utilisateurs particulièrement délicate.

L'invention vise donc à améliorer la mesure d'une pseudo-sirène modulée dans un bruit ambiant.

Elle a donc pour objet un procédé de mesure selon la revendication 1.

Un ordre du premier rang du moteur est une fréquence $f_i$ définie par la relation suivante : $f_i = iNf_c$ où :

- i est un multiple de 1/Nb-tc inférieur ou égale à (Nb-Cyl/ Nb-tc), où Nb-tc est le nombre de tours complets du vilebrequin du moteur par cycle du moteur et Nb-Cyl est le nombre de cylindres du moteur,
- N est égal à 1 ; et
- $f_c$ est la fréquence de rotation du vilebrequin, c'est-à-dire le nombre de tours du vilebrequin ou de l'arbre par seconde.

La fréquence de modulation est la fréquence du signal qui module la porteuse. Généralement, la fréquence de modulation est inférieure à la fréquence de la porteuse.

Il a été découvert que la pseudo-sirène modulée est causée par des harmoniques des ordres du premier rang du moteur thermique qui se propagent par l'intermédiaire d'une courroie ou d'une chaîne de transmission jusqu'à un pignon d'engrènement de l'organe rotatif. La pseudo-sirène modulée est alors rayonnée sensiblement à l'emplacement où le pignon de l'organe rotatif s'engrène avec la courroie ou la chaîne de transmission. Ces harmoniques sont également transmises à l'organe rotatif lui-même qui à son tour peut les transmettre à d'autres éléments susceptibles de rayonner la pseudo-sirène modulée.

Ainsi, la prise en compte simultanée de la puissance du bruit mesuré dans la plage réduite et de l'amplitude d'une fréquence de modulation multiple entier d'un des ordres du premier rang du moteur permet de distinguer plus facilement la pseudo- sirène modulée dans le bruit ambiant. La mesure de la pseudo- sirène modulée est donc améliorée et plus robuste. La mesure obtenue et aussi plus cohérente avec la pseudo- sirène modulée telle qu'entendue par l'ouie humaine.

Les modes de réalisation de ce procédé de mesure peuvent comporter une ou plusieurs des caractéristiques suivantes :

■ la plage réduite de fréquences correspond à la seule plage de fréquences où une source de bruit spécifiquement localisée sur l'organe rotatif dépasse un seuil au-delà duquel elle est directement perceptible par l'ouie d'un être humain dans le bruit ambiant et tombe en deçà de ce seuil pour d'autres conditions de fonctionnement du moteur thermique ;

■ la plage réduite est comprise entre 300 et 800 Hz et, de préférence, entre 500 et 600 Hz ;

■ l'étape de détermination de l'amplitude de modulation est opérée en appliquant une pondération à chacune des amplitudes des fréquences de modulation correspondant à un multiple non entier d'un ordre du moteur et, de préférence, 25% pour l'amplitude de la première et 75% pour l'amplitude de la deuxième ;

■ l'amplitude d'une fréquence de modulation d'un ordre non entier du moteur correspond à la combinaison des amplitudes de la fréquence de modulation fondamentale et de ses harmoniques

■ l'amplitude de la première fréquence de modulation correspondant à un multiple non entier d'un ordre moteur nécessite une pondération appliquée à la fréquence fondamentale et aux première et deuxième harmoniques de cette fréquence et, de préférence, 50% pour l'amplitude de la fréquence fondamentale, 25% pour l'amplitude de la première harmonique et 25% pour l'amplitude de la deuxième harmonique de la fréquence de modulation.

■ l'amplitude de la deuxième fréquence de modulation correspondant à un multiple non entier d'un ordre moteur nécessite une pondération appliquée à la fréquence fondamentale et à la première harmonique de cette fréquence de modulation et, de préférence, 75% pour l'amplitude de la fréquence fondamentale et 25% pour l'amplitude de la première harmonique de la fréquence de modulation.

■ chaque fréquence de modulation dont l'amplitude est déterminée n'est pas un multiple entier de la fréquence de rotation d'un arbre du moteur thermique.

■ le moteur thermique est celui d'un véhicule et l'organe rotatif est une pompe d'un liquide de refroidissement du moteur thermique ;

■ le calcul de la puissance et la détermination de l'amplitude sont réalisés à partir du même bruit mesuré par un même capteur acoustique.

Ces modes de réalisation du procédé de mesure présentent en outre les avantages suivants :

- le choix des fréquences de modulation qui ne sont pas également des multiples entiers de la fréquence de rotation de l'arbre du moteur accroît la fiabilité de la mesure ; et
- l'utilisation d'un seul capteur pour réaliser les mesures qui permettent de calculer la puissance et de déterminer l'amplitude des fréquences de modulation simplifie la réalisation ce procédé.

L'invention a également pour objet un procédé de construction d'un indicateur de présence de la pseudo-sirène modulée de présence dans un bruit ambiant, ce procédé comprenant :

- la mesure, à l'aide du procédé de mesure ci-dessus, de la pseudo-sirène modulée, et
- la construction d'un indicateur à partir du rapport entre la mesure et un seuil en dessous duquel la pseudo-sirène modulée n'est pas directement perceptible par l'ouïe humaine.

L'invention a également pour objet un dispositif de mesure de la pseudo-sirène modulée, selon la revendication 12.

Enfin, l'invention a également pour objet un véhicule comportant le dispositif de mesure ci- dessus.

Les modes de réalisation de ce véhicule peuvent comporter la caractéristique suivante :

■ le capteur acoustique est logé à l'intérieur de l'habitable du véhicule.

L'invention sera mieux comprise à la lecture de la description qui va suivre, donnée uniquement à titre d'exemple non limitatif et faite en se référant aux dessins sur lesquels :

- la figure 1 est une illustration schématique d'un véhicule équipé d'un dispositif de mesure d'une pseudo-sirène modulée,
- la figure 2 est un organigramme d'un procédé de mesure et de construction d'un indicateur de présence d'une pseudo-sirène modulée;
- les figures 3 et 4 sont des illustrations schématiques de cartographies acoustiques ;
- la figure 5 est un graphe représentant des spectres de puissance du bruit ambiant ; et
- la figure 6 est un graphe représentant le spectre de l'enveloppe du bruit ambiant dans une plage étendue de fréquences.

Dans ces figures, les mêmes références sont utilisées pour désigner les mêmes éléments.
Dans la suite de cette description, les caractéristiques et fonctions bien connues de l'homme du métier ne sont pas décrites en détail.

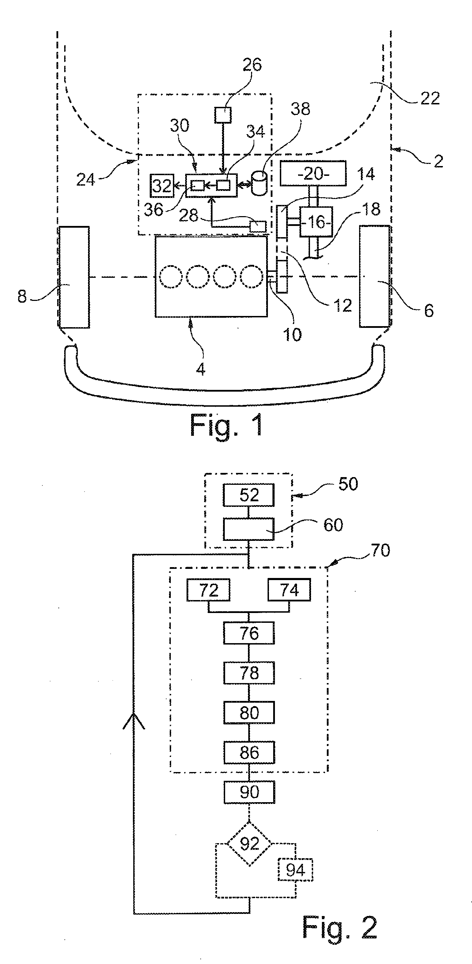

La figure 1 représente un véhicule 2. Par exemple, le véhicule 2 est un véhicule automobile tel qu'une voiture. Ce véhicule 2 est équipé d'un moteur thermique 4 à combustion interne qui entraîne en rotation des roues motrices 6, 8 du véhicule 2. Un arbre 10 du moteur 4 entraîne en rotation une courroie 12 de transmission sur laquelle s'engrènent différents organes rotatifs.
Ici, le moteur 4 est un moteur quatre temps à quatre cylindres. Ainsi, un cycle complet de ce moteur se fait en deux tours de vilebrequin ou de l'arbre 10. Les ordres du premier rang du moteur 4 sont donc les fréquences suivantes : $f_1 = 0$, $5f_c$, $f_2=f_c$, $f_3=1$, $5f_c$ et $f_4=2f_c$, où $f_c$ est la fréquence de rotation de l'arbre 10. Dans la suite de cette description, ces ordres sont appelés, respectivement, « ordre 0, 5 », « ordre 1 », « ordre 1, 5 » et « ordre 2 ».
En particulier, la courroie 12 s'engrène avec un pignon 14 d'une pompe 16. La pompe 16 pompe un liquide caloporteur pour le faire circuler dans un circuit 18 de refroidissement du moteur 4. Le circuit 18 est uniquement représenté partiellement pour simplifier la figure 1. Le circuit 18 est raccordé à un aérotherme 20 qui permet de chauffer l'intérieur de l'habitable 22 du véhicule 2 à l'aide du liquide caloporteur réchauffé par le moteur 4. Ici, le liquide caloporteur est de l'eau glycolée de sorte que la pompe 16 est également connue sous le terme de « pompe à eau ».
Le véhicule 2 comprend un dispositif 24 de mesure et de construction d'un indicateur de présence d'une pseudo-sirène modulée. En effet, il a été constaté que dans certaines conditions de fonctionnement du moteur 4, un bruit du type « wow wow » appelé ici « pseudo-sirène modulée » apparaissait. Typiquement, un tel bruit apparaît uniquement lorsque le moteur est froid et fonctionne au ralenti.
Le dispositif 24 comprend :

- un capteur acoustique 26 et un capteur 28 de la fréquence de rotation de l'arbre 10 ;

- un calculateur électronique 30 recevant les mesures des capteurs 26 et 28, et
- éventuellement, une interface homme-machine 32 pour afficher la mesure ou un indicateur de présence de la pseudo-sirène modulée.

Ici, le capteur 26 est placé à l'intérieur de l'habitable 22.

L'interface homme-machine 32 est par exemple formée d'un écran d'affichage.

Le calculateur 30 comprend un échantillonneur 34 qui échantillonne les signaux mesurés par les capteurs 26 et 28 ainsi qu'une unité 36 de calcul qui établit la mesure de la pseudo-sirène modulée et construit l'indicateur de présence de cette pseudo-sirène modulée.

Typiquement, l'unité 36 est réalisée à partir de calculateurs électroniques programmables aptes à exécuter des instructions enregistrées sur un support d'enregistrement d'informations. A cet effet, l'unité 36 et, plus généralement, le calculateur 30 sont raccordés à une mémoire 38 comprenant les instructions nécessaires pour exécuter le procédé de la figure 2.

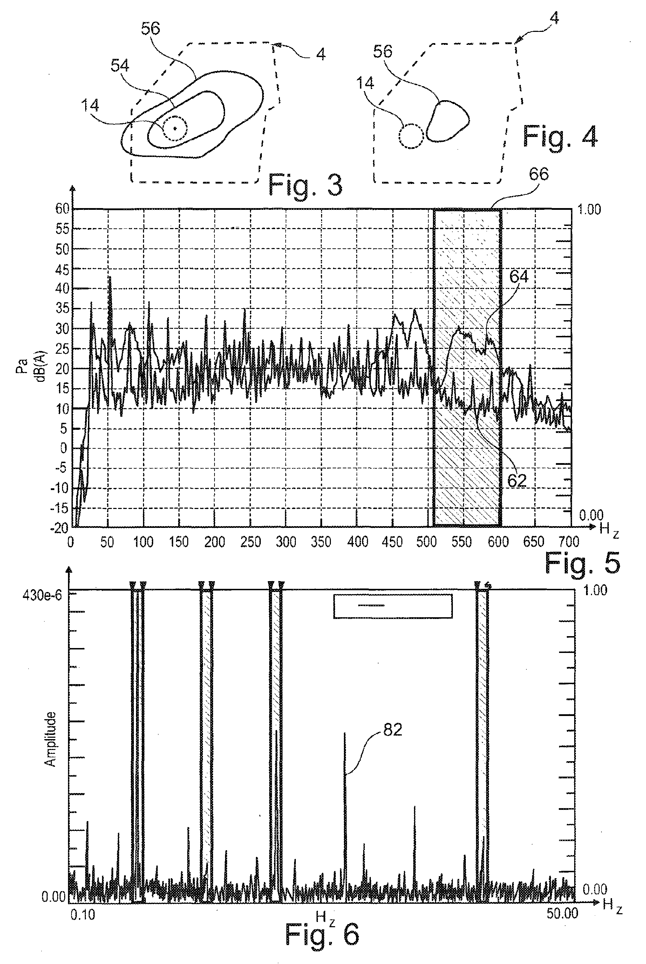

Le fonctionnement du dispositif 24 va maintenant être décrit en regard du procédé de la figure 2 et à l'aide des illustrations des figures 3 à 6.

Le procédé débute par une phase 50 de calibration. Cette phase 50 comprend une étape 52 d'identification d'une plage réduite de fréquences dans laquelle la pseudo-sirène modulée est directement perceptible par l'ouie humaine. Par exemple, à cet effet, une cartographie acoustique du moteur 4 placé sur un banc de test est réalisée. Une telle cartographie consiste à enregistrer le bruit généré par ce moteur lors de son fonctionnement à l'aide d'un très grand nombre de capteurs acoustiques, par exemple plus de 60, placés à différents endroits du moteur. Ensuite, après un traitement informatique des différentes mesures, une cartographie précise permettant de localiser les différentes sources de bruit du moteur 4 est construite.

Ici, des cartographies acoustiques sont construites pour différentes fréquences de rotation de l'arbre 10 et pour différentes conditions de fonctionnement du moteur 4. En particulier, des cartographies sont construites pour des fréquences de rotation correspondant à un régime du moteur compris entre 750 tours par minute et 950 tours par minute. Pour les mêmes fréquences de rotation, les cartographies sont construites une fois avec le moteur 4 froid et une fois avec le moteur 4 chaud.

Il a été constaté que lorsque la pseudo-sirène modulée peut être entendue directement par l'ouie humaine, cela correspond à l'apparition d'une source localisée de bruit située à proximité du pignon 14 de la pompe 16. Cette source de bruit produit un bruit audible sur une plage réduite de fréquences. Par exemple, cette plage réduite correspond aux fréquences comprises entre 560 et 600 Hz. Lorsque la pseudo-sirène modulée n'est pas directement perceptible par l'ouie humaine, cette source de bruit disparaît.

Ceci est représenté sous forme simplifiée sur les figures 3 et 4. Sur la figure 4, la cartographie acoustique montre une première zone 54 délimitée par une ligne continue qui s'étire autour du pignon 14. Cette zone 54 délimite une source de bruit compris entre 560 et 600 Hz et dont la puissance est supérieure à 60 dB. En s'éloignant du pignon 14, le bruit diminue. C'est ce qui est représenté par une autre zone 56 entourant la zone 54. Dans la zone 56 le niveau de bruit est strictement inférieur à 60 dB.

Sur la figure 4, lorsque la pseudo-sirène modulée n'est plus audible, la zone 54 a disparu et la zone 56 est beaucoup plus réduite.

Par exemple, les cartographies des figures 3 et 4 sont construites pour la même fréquence de rotation. Toutefois, dans le cas de la figure 3, le moteur 4 est froid tandis que dans la figure 4 il est chaud.

Lors de la phase 50, on procède également à une étape 60 d'identification d'une plage étendue de fréquences dans laquelle la pseudo-sirène modulée est directement perceptible par l'ouie humaine. La plage étendue englobe la plage réduite précédemment identifiée. Pour identifier cette plage étendue, on procède par comparaison du spectre de puissance du bruit ambiant enregistré lorsque la pseudo-sirène modulée est directement perceptible par l'ouie humaine et dans le cas contraire. La figure 5 représente par une ligne 62 le spectre de puissance du bruit mesuré enregistré lorsque la pseudo-sirène modulée n'est pas directement perceptible par l'ouie humaine. Sur ce même graphe, on a superposé le spectre 64 de puissance du bruit enregistré lorsque la pseudo-sirène modulée est directement perceptible par l'ouie humaine. En comparant ces spectres 62 et 64, on détermine expérimentalement une zone 66 dans laquelle la puissance du spectre 64 se distingue très clairement de la puissance du spectre 62. La plage de fréquences correspondant à cette zone 66 est la plage étendue recherchée. Par exemple, cette plage étendue correspond aux fréquences comprises entre 510 et 600 Hz.

Ces plages réduite et étendue sont ensuite utilisées lors d'une phase 70 de mesure par le dispositif 24 de la pseudo-sirène modulée dans le bruit ambiant.

La phase 70 débute par des étapes 72, 74 de mesure, respectivement, du bruit ambiant et de la fréquence $f_c$ de rotation de l'arbre 10. Ces mesures sont réalisées à l'aide des capteurs 26 et 28.

Plus précisément, la mesure du bruit ambiant est réalisée pendant une période $\Delta t$ pendant laquelle la fréquence de rotation de l'arbre 10 est constante.

Ensuite, lors d'une étape 76, ces mesures sont échantillonnées par l'échantillonneur 34. Par exemple, la fréquence d'échantillonnage est de 4096 Hz avec une résolution de 1 Hz. On procède également lors de l'étape 76 à un fenêtrage du signal acoustique mesuré. Ce fenêtrage est par exemple réalisé à partir d'une fenêtre d'observation de Hanning.

Une fois les différentes mesures échantillonnées et fenêtrées, celles-ci sont acquises par l'unité 36 pour y être traitées.

Ainsi, lors d'une étape 78, l'unité 36 détermine à partir des mesures réalisées la puissance $P_{560-600}$ de la pseudo- sirène modulée dans la plage réduite par rapport à la puissance $P_{510-600}$ du bruit mesurée dans la plage étendue.

Pour cela, l'unité 36 calcule les puissances $P_{560-600}$ et $P_{510-600}$ à partir des mesures réalisées lors de l'étape 72. Ensuite, l'unité 34 calcule un coefficient $I_1$ d'amplification. Le coefficient $I_l$ est par exemple calculé à l'aide de la relation suivante : $I_1 = (P_{560-600})/P_{510-600})$.

Ce coefficient $I_1$ permet de mesurer l'émergence d'un bruit fort dans la bande réduite par rapport au niveau de bruit dans la bande étendue.

Ensuite, lors d'une étape 80, l'unité 36 détermine l'amplitude d'au moins une fréquence de modulation multiple entier d'un des ordres du premier rang du moteur 4 dans la plage étendue [510Hz ; 600Hz]. Par exemple, pour cela, le bruit mesuré est d'abord filtré à l'aide d'un filtre passe- bande pour sélectionner uniquement les fréquences comprises entre 510 et 600 Hz. Ensuite, une transformée de Hilbert est utilisé pour construire le spectre de l'enveloppe du signal filtré.

Par exemple, pour cela, on applique une transformée de Fourrier au signal filtré. Ensuite, la transformée de Fourrier obtenue est transformée en utilisant l'opérateur -j sgn(f) où :

- j est le nombre imaginaire,
- f est une fréquence, et
- sgn(f) est égale à 1 si la fréquence f est positive ou est égale à zéro si la fréquence f est nulle ou est égale à -1 si la fréquence f est négative.

La figure 6 représente un graphe d'un exemple de spectre d'enveloppe 82 obtenu.

Ensuite, dans le spectre 82, on relève l'amplitude des fréquences de modulation correspondant à des harmoniques des ordres de premier rang du moteur 4. Pour cela, on utilise la fréquence de rotation $f_c$ mesurée lors de l'étape 74. Par exemple, pour un régime moteur de 750 tours par minute, la fréquence $f_c$ est égale à 12, 5 Hz. Par conséquent, les fréquences $f_1$ à $f_4$ des ordres du premier rang du moteur 4 sont égales, respectivement, à 6, 25 Hz, 12, 5 Hz, 18, 75 Hz et 25 Hz. On relève alors dans le spectre 82 l'amplitude d'au moins une de ces fréquences ainsi que l'amplitude de ses harmoniques. Dans le cas particulier décrit ici, seules les amplitudes des fréquences correspondant aux ordres 0, 5 et 1, 5 ainsi que les premiers harmoniques de ces fréquences sont relevés. Par exemple, on relève les amplitudes à $E_{0,5}$, $E_1$, $E_{1,5}$ et $E_3$ à, respectivement, 6, 25 Hz, 12, 5 Hz, 18, 75 Hz et 37, 5 Hz.

Sur la figure 6, les pics dont l'amplitude est relevée sont mis en évidence par des bandes verticales hachurées.

Ensuite, les amplitudes $A_{0,5}$ et $A_{1,5}$ des harmoniques des fréquences de modulation $f_1$ et $f_3$ sont calcu-

lées. Pour tenir compte du caractère impulsionel de la modulation, on tient également compte dans le calcul de l'amplitude des premiers harmoniques des fréquences $f_1$ et $f_3$.

Par exemple, l'amplitude $A_{0,5}$ est calculée à l'aide de la relation suivante : $A_{0,5} = 0,5 E_{0,5} + 0,25 E_1 + 0,25 E_{1,5}$.

De façon similaire, l'amplitude $A_{1,5}$ est calculée à l'aide de la relation suivante : $A_{1,5} = 0,75 E_1 + 0,25 E_3$.

Ensuite, un terme $I_2$ représentatif des amplitudes mesurées et homogène avec une puissance est calculé. Par exemple, le terme $I_2$ est calculé à l'aide de la relation suivante : $I_2 = \sqrt{(\alpha A_{0,5}^2 + \beta A_{1,5}^2)}$, où $\alpha$ et $\beta$ sont des coefficients de pondération dont la somme est égale à 1.

Ici, une mesure plus précise de la pseudo- sirène modulée est obtenue en donnant plus d'importance à l'ordre 1, 5 qu'à l'ordre 0, 5. A cet effet, les valeurs des coefficients $\alpha$ et $\beta$ sont par exemple choisies, respectivement, égales à 0, 25 et 0, 75.

Enfin, lors d'une étape 86, la mesure I de la pseudo- sirène modulée est construite à partir des termes $I_1$ et $I_2$. Plus précisément, ici, la mesure I est construite de manière à être proportionnelle à la fois aux termes $I_1$ et $I_2$. Par exemple, la mesure I est obtenue à l'aide de la relation suivante : $I = I_1 \times I_2$

Une fois la valeur de la mesure I obtenue la phase 70 s'achève.

La phase 70 se poursuit par une étape 90 de construction d'un indicateur $I_b$ de la présence d'une pseudo-sirène modulée directement perceptible par l'ouie humaine. Ici, la valeur de l'indicateur $I_b$ est calculé à l'aide de la relation suivante : $I_b = 10 \, Log(I/I_s)$, où $I_s$ est un seuil prédéterminé d'audibilité de la pseudo-sirène modulée en deçà duquel elle n'est pas directement perceptible par l'ouie humaine.

Par exemple, le seuil $I_s$ est égale à une mesure de la pseudo-sirène modulée obtenue en exécutant la phase 70 dans des conditions de fonctionnement du moteur 4 où la pseudo-sirène modulée n'est pas directement audible par l'ouie humaine.

L'indicateur $I_b$ permet de prédire la sensation de bruit ressenti par les utilisateurs et en particulier de prédire si la pseudo-sirène modulée est directement audible par l'ouie humaine et avec quelle intensité.

Eventuellement, ensuite, lors d'une étape 92, la valeur de l'indicateur $I_b$ est comparée à un seuil prédéterminé $S_1$. Le seuil $S_1$ correspond à un seuil au- delà duquel la pseudo- sirène modulée devient gênante pour les utilisateurs du véhicule. Si ce seuil $S_1$ est franchi, lors d'une étape 94, on déclenche le signalement de la présence de la pseudo- sirène modulée et/ou une action corrective pour diminuer la valeur de l'indicateur $I_b$.

Les étapes 72 à 94 peuvent être réitérées en boucle.

La mesure I et/ou l'indicateur $I_b$ sont particuliè-

rement utiles pour choisir le réglage du moteur 4 ou la configuration de la courroie 12 ou du pignon 14 permettant de limiter l'apparition de la pseudo-sirène modulée. La mesure l et l'indicateur $l_b$ peuvent également être utilisés pour tester et sélectionner des composants permettant de limiter ou d'éliminer l'apparition de la pseudo-sirène modulée. Par exemple, on considère que la pseudo-sirène modulée est éliminée si la valeur de l'indicateur $l_b$ est inférieure à 3 dB.

De nombreux autres modes de réalisation sont possibles. Par exemple, le capteur 26 peut être placé à l'intérieur du compartiment moteur et plus précisément à proximité du pignon 14. Malgré cette modification, les calculs décrit ci-dessus restent les mêmes. Ainsi, les calculs décrits sont indépendants de la position du capteur acoustique à l'intérieur du véhicule.

Ce qui a été décrit dans le cas particulier d'un moteur à quatre cylindres peut s'appliquer à tout type de cylindrée. Le moteur peut être un moteur suralimenté ou non. Il peut également s'agir d'un moteur à essence ou d'un moteur Diesel. Il peut aussi s'agir d'un moteur à deux, trois ou quatre temps ou plus. Dans tous ces cas, il est possible d'adapter le dispositif 24 à ces utilisations.

De façon plus générale, la plage réduite et, éventuellement, la plage étendue de fréquences sont systématiquement comprises entre 400 et 800 Hz.

Le capteur 28 peut être remplacé par un estimateur.

La courroie de transmission peut être remplacée par une chaîne de transmission.

**Revendications**

1. Procédé de mesure d'une pseudo-sirène modulée générée dans une plage réduite de fréquences par un organe rotatif entraîné en rotation par un moteur thermique à combustion interne, **caractérisé en ce que** ce procédé comporte :

    - la mesure (72) d'un bruit ambiant susceptible de contenir la pseudo-sirène modulée,
    - le calcul (78) de la puissance du bruit mesuré dans la plage réduite, le calcul (78) de la puissance du bruit mesuré sur une plage plus étendue de fréquences incluant la plage réduite, et le calcul d'un rapport entre les puissances calculées sur les plages réduite et étendue pour indiquer l'émergence d'un bruit dans la plage réduite de fréquences,
    - la détermination, (80) à partir de l'amplitude dans la plage réduite de fréquences, de l'amplitude d'au moins une fréquence de modulation multiple non entier d'un ordre du moteur et de ses harmoniques et
    - la construction (86) de la mesure de la pseudo-sirène modulée à partir du produit du rapport entre les puissances calculées par un terme représentatif de l'amplitude de l'au moins une fréquence de modulation déterminée.

2. Procédé selon la revendication 1, dans lequel la plage réduite de fréquences correspond à la seule plage de fréquences où une source de bruit spécifiquement localisée sur l'organe rotatif dépasse un seuil au-delà duquel elle est directement perceptible par l'ouie d'un être humain dans le bruit ambiant et tombe en deçà de ce seuil pour d'autres conditions de fonctionnement du moteur thermique.

3. Procédé selon la revendication 1 ou la revendication 2, dans lequel la plage réduite est comprise entre 300 et 800 Hz et, de préférence, entre 500 et 600 Hz.

4. Procédé selon l'une quelconque des revendications précédentes, dans lequel l'étape (80) où est déterminée l'amplitude d'au moins une fréquence de modulation est opérée avec une pondération appliquée à chacune des amplitudes des fréquences de modulation correspondant à un multiple non entier d'un ordre du moteur et, de préférence, 22% pour l'amplitude de la première et 75% pour l'amplitude de la deuxième.

5. Procédé selon l'une quelconque des revendications précédentes, dans lequel l'amplitude d'une fréquence de modulation d'un ordre non entier du moteur correspond à la combinaison des amplitudes de la fréquence de modulation fondamentale et de ses harmoniques.

6. Procédé selon l'une quelconque des revendications précédentes, dans lequel l'amplitude d'une première fréquence de modulation correspondant à un multiple non entier d'un ordre moteur nécessite une pondération appliquée à la fréquence fondamentale et aux première et deuxième harmoniques de cette fréquence et, de préférence, 50% pour l'amplitude de la fréquence fondamentale, 25% pour l'amplitude de la première harmonique et 25% pour l'amplitude de la deuxième harmonique de la fréquence de modulation.

7. Procédé selon l'une quelconque des revendications précédentes, dans lequel l'amplitude d'une deuxième fréquence de modulation correspondant à un multiple non entier d'un ordre moteur nécessite une pondération appliquée à la fréquence fondamentale et à la première harmonique de cette fréquence de modulation et, de préférence, 75% pour l'amplitude de la fréquence fondamentale et 25% pour l'amplitude de la première harmonique de la fréquence de modulation.

8. Procédé selon l'une quelconque des revendications précédentes, dans lequel chaque fréquence de modulation dont l'amplitude est déterminée n'est pas un multiple entier de la fréquence de rotation d'un arbre du moteur thermique.

9. Procédé selon l'une quelconque des revendications précédentes, dans lequel le moteur thermique est celui d'un véhicule et l'organe rotatif est une pompe d'un liquide de refroidissement du moteur thermique.

10. Procédé selon l'une quelconque des revendications précédentes, dans lequel le calcul de la puissance et la détermination de l'amplitude sont réalisés à partir du même bruit mesuré par un même capteur acoustique.

11. Procédé de construction d'un indicateur de présence, dans un bruit ambiant, d'une pseudo-sirène modulée générée dans une plage réduite de fréquences par un organe rotatif entraîné en rotation par un moteur thermique à combustion interne, **caractérisé en ce que** ce procédé comprend :

    - la mesure (70), à l'aide d'un procédé conforme à l'une quelconque des revendications précédentes, de la pseudo-sirène modulée, et
    - la construction (90) d'un indicateur à partir du rapport entre la mesure et un seuil en dessous duquel la pseudo-sirène modulée n'est pas directement perceptible par l'ouie humaine.

12. Dispositif de mesure d'une pseudo-sirène modulée générée dans une plage réduite de fréquences par un organe rotatif entraîné en rotation par un moteur thermique à combustion interne, **caractérisé en ce que** ce dispositif comporte :

    - un capteur acoustique (26) pour mesurer le bruit ambiant, et ,
    - une unité (36) de calcul adapté :

        - à calculer la puissance du bruit mesuré dans la plage réduite, à calculer la puissance du bruit mesuré sur une plage plus étendue de fréquences incluant la plage réduite, et à calculer un rapport entre les puissances calculées sur les plages réduite et étendue pour indiquer l'émergence d'un bruit dans la plage réduite de fréquences,
        • à déterminer, à partir de l'amplitude dans la plage réduite de fréquences, l'amplitude d'au moins une fréquence de modulation multiple non entier d'un ordre du moteur et de ses harmoniques, l'amplitude d'au moins une fréquence de modulation multiple entier d'un ordre du premier rang du moteur, et
        • à construire la mesure de la pseudo-sirène modulée à partir du produit du rapport entre les puissances calculées par un terme représentatif de l'amplitude de l'au moins une fréquence de modulation déterminée.

13. Véhicule, **caractérisé en ce qu'**il comporte un dispositif (24) de mesure conforme à la revendication 12.

14. Véhicule selon la revendication 13, dans lequel le capteur acoustique (26) est logé à l'intérieur de l'habitable du véhicule.

**Patentansprüche**

1. Verfahren zur Messung einer modulierten Pseudosirene, die in einem verringerten Bereich von Frequenzen von einem drehenden Organ erzeugt wird, das von einem Verbrennungsmotor in Drehung angetrieben wird, **dadurch gekennzeichnet, dass** dieses Verfahren Folgendes aufweist:

    - die Messung (72) eines Umgebungsgeräuschs, das die modulierte Pseudosirene enthalten kann,
    - die Berechnung (78) der Leistung des gemessenen Geräuschs in dem verringerten Bereich, wobei die Berechnung (78) der Leistung des gemessenen Geräuschs auf einem weiteren Bereich von Frequenzen den verringerten Bereich enthält, und die Berechnung eines Verhältnisses zwischen den auf dem verringerten und auf dem erweiterten Bereich gemessenen Leistungen, um das Auftreten eines Geräusch in dem verringerten Bereich von Frequenzen anzuzeigen,
    - das Bestimmen (80), ausgehend von der Amplitude in dem verringerten Bereich von Frequenzen, der Amplitude mindestens einer Frequenzmodulation, die ein nicht ganzzahliges Vielfaches einer Ordnung des Motors und seiner Oberwellen ist, und
    - die Konstruktion (86) der Messung der modulierten Pseudosirene ausgehend von dem Produkt des Verhältnisses zwischen den berechneten Leistungen durch ein Glied, das für die Amplitude der mindestens einen bestimmten Modulationsfrequenz repräsentativ ist.

2. Verfahren nach Anspruch 1, bei dem der verringerte Bereich von Frequenzen dem einzigen Frequenzbereich entspricht, in dem eine Geräuschquelle, die spezifisch auf dem drehenden Organ liegt, einen Schwellenwert überschreitet, über welchen hinaus sie direkt von dem Gehör eines Menschen in dem Umgebungsgeräuschs vernehmbar ist und bei anderen Betriebsbedingungen des Verbrennungsmotors unter diesen Schwellenwert fällt.

**3.** Verfahren nach Anspruch 1 oder Anspruch 2, bei dem der verringerte Bereich zwischen 300 und 800 Hz und vorzugsweise zwischen 500 und 600 Hz liegt.

**4.** Verfahren nach einem der vorhergehenden Ansprüche, bei dem der Schritt (80), an dem die Amplitude mindestens einer Modulationsfrequenz bestimmt wird, mit einer Gewichtung ausgeführt wird, die an jede der Amplituden der Modulationsfrequenzen angewandt wird, die einem nicht ganzzahligen Vielfachen einer Ordnung des Motors entsprechen, und, vorzugsweise, 25 % für die Amplitude der ersten und 75 % für die Amplitude der zweiten.

**5.** Verfahren nach einem der vorhergehenden Ansprüche, bei dem die Amplitude einer Modulationsfrequenz einer nicht ganzzahligen Ordnung des Motors der Kombination der Amplituden der Modulationsgrundfrequenz und ihrer Oberwellen entspricht.

**6.** Verfahren nach einem der vorhergehenden Ansprüche, bei dem die Amplitude einer ersten Modulationsfrequenz, die einem nicht ganzzahligen Vielfachen einer Ordnung des Motors entspricht, eine Gewichtung erfordert, die an die Grundfrequenz und an die erste und die zweite Oberwelle dieser Frequenz angewandt wird und vorzugsweise 50 % für die Amplitude der Grundfrequenz, 25 % für die Amplitude der ersten Oberwelle und 25 % für die Amplitude der zweiten Oberwelle der Modulationsfrequenz.

**7.** Verfahren nach einem der vorhergehenden Ansprüche, bei dem die Amplitude einer zweiten Modulationsfrequenz, die einem nicht ganzzahligen Vielfachen einer Ordnung des Motors entspricht, eine Gewichtung erfordert, die an die Grundfrequenz und an die erste Oberwelle dieser Modulationsfrequenz angewandt wird, und, vorzugsweise, 75 % für die Amplitude der Grundfrequenz und 25 % für die Amplitude der ersten Oberwelle der Modulationsfrequenz.

**8.** Verfahren nach einem der vorhergehenden Ansprüche, bei dem jede Modulationsfrequenz, deren Amplitude bestimmt ist, nicht ein ganzzahliges Vielfaches der Drehfrequenz einer Welle des Verbrennungsmotors ist.

**9.** Verfahren nach einem der vorhergehenden Ansprüche, bei dem der Verbrennungsmotor der eines Fahrzeugs ist und das Drehorgan eine Pumpe einer Kühlflüssigkeit des Verbrennungsmotors ist.

**10.** Verfahren nach einem der vorhergehenden Ansprüche, bei dem die Berechnung der Leistung und die Bestimmung der Amplitude ausgehend von demselben Geräusch, das von demselben akustischen Sensor gemessen wird, ausgeführt werden.

**11.** Verfahren zur Konstruktion eines Indikators der Gegenwart in einem Umgebungsgeräuschs einer modulierten Pseudosirene, die in einem verringerten Bereich von Frequenzen von einem Drehorgan erzeugt wird, das von einem Verbrennungsmotor in Drehung angetrieben wird, **dadurch gekennzeichnet, dass** dieses Verfahren Folgendes aufweist:

- die Messung (70) der modulierten Pseudosirene mit Hilfe eines Verfahrens nach einem der vorhergehenden Ansprüche und,
- die Konstruktion (90) eines Indikators ausgehend von dem Verhältnis zwischen der Messung und einem Schwellenwert, unter welchem die modulierte Pseudosirene nicht direkt vom menschlichen Gehör vernehmbar ist.

**12.** Vorrichtung zum Messen einer modulierten Pseudosirene, die in einem verringerten Bereich von Frequenzen von einem Drehorgan, das in Drehung von einem Verbrennungsmotor angetrieben wird, erzeugt wird, **dadurch gekennzeichnet, dass** diese Vorrichtung Folgendes aufweist:

- einen akustischen Sensor (26) zum Messen des Umgebungsgeräuschs, und
- eine Berechnungseinheit (36), die angepasst ist:

• um die Leistung des gemessenen Geräuschs in dem verringerten Bereich zu berechnen, die Leistung des gemessenen Geräuschs auf einem weiteren Bereich von Frequenzen, der den verringerten Bereich enthält, zu berechnen, und ein Verhältnis zwischen den auf dem verringerten Bereich und dem erweiterten Bereich berechneten Leistungen zu berechnen, um das Auftreten eines Geräuschs in dem verringerten Bereich von Frequenzen anzuzeigen,
• um ausgehend von der Amplitude in dem verringerten Bereich von Frequenzen die Amplitude mindestens einer Modulationsfrequenz, die ein nicht ganzzahliges Vielfaches einer Ordnung des Motors ist und ihrer Oberwellen zu bestimmen, die Amplitude mindestens einer Modulationsfrequenz, die ein ganzzahliges Vielfaches einer Ordnung des ersten Rangs des Motors ist, und
• die Messung der modulierten Pseudosirene ausgehend von dem Produkt des Verhältnisses zwischen den berechneten Leistungen durch ein Glied zu konstruieren, das für die Amplitude mindestens einer bestimmten Modulationsfrequenz repräsentativ ist.

**13.** Fahrzeug, **dadurch gekennzeichnet, dass** es eine Messvorrichtung (24) nach Anspruch 12 aufweist.

14. Fahrzeug nach Anspruch 13, bei dem der akustische Sensor (26) im Inneren der Fahrgastzelle des Fahrzeugs untergebracht ist.

## Claims

1. A method for measuring a modulated pseudo-siren generated in a narrow range of frequencies by a rotating member driven in rotation by an internal combustion heat engine, **characterized in that** this method comprises:

   - the measurement (72) of an ambient noise likely to contain the modulated pseudo-siren,
   - the calculation (78) of the power of the measured noise in the narrow range, the calculation (78) of the power of the measured noise on a wider range of frequencies including the narrow range, and the calculation of a ratio between the powers calculated on the narrow and wide ranges to indicate the emergence of a noise in the narrow range of frequencies,
   - the determining, (80) from the amplitude in the narrow range of frequencies, of the amplitude of at least one modulation frequency that is a non-integer multiple of an order of the engine and of its harmonics and
   - the construction (86) of the measurement of the modulated pseudo-siren from the product of the ratio between the calculated powers by a representative term of the amplitude of the at least one determined modulation frequency.

2. The method according to Claim 1, in which the narrow range of frequencies corresponds to the sole range of frequencies in which a source of noise specifically localized on the rotary member exceeds a threshold beyond which it is directly perceptible by the hearing of a human being in the ambient noise and falls below this threshold for other operating conditions of the heat engine.

3. The method according to Claim 1 or Claim 2, in which the narrow range is comprised between 300 and 800 Hz and, preferably, between 500 and 600 Hz.

4. The method according to any one of the preceding claims, in which the step (80) where the amplitude is determined of at least one modulation frequency is operated with a weighting applied to each of the amplitudes of the modulation frequencies corresponding to a non-integer multiple of an order of the engine and, preferably 25% for the amplitude of the first and 75% for the amplitude of the second.

5. The method according to any one of the preceding claims, in which the amplitude of a modulation frequency of a non-integer order of the engine corresponds to the combination of the amplitudes of the fundamental modulation frequency and of its harmonics.

6. The method according to any one of the preceding claims, in which the amplitude of a first modulation frequency corresponding to a non-integer multiple of an engine order necessitates a weighting applied to the fundamental frequency and to the first and second harmonics of this frequency and, preferably, 50% for the amplitude of the fundamental frequency, 25% for the amplitude of the first harmonic and 25% for the amplitude of the second harmonic of the modulation frequency.

7. The method according to any one of the preceding claims, in which the amplitude of a second modulation frequency corresponding to a non-integer multiple of an engine order necessitates a weighting applied to the fundamental frequency and to the first harmonic of this modulation frequency and, preferably, 75% for the amplitude of the fundamental frequency and 25% for the amplitude of the first harmonic of the modulation frequency.

8. The method according to any one of the preceding claims, in which each modulation frequency of which the amplitude is determined is not an integer multiple of the rotation frequency of a shaft of the heat engine.

9. The method according to any one of the preceding claims, in which the heat engine is that of a vehicle and the rotating member is a pump of a cooling liquid of the heat engine.

10. The method according to any one of the preceding claims, in which the calculation of the power and the determining of the amplitude are realized from the same noise measured by the same acoustic sensor.

11. A method for constructing an indicator of the presence, in an ambient noise, of a modulated pseudo-siren generated in a narrow range of frequencies by a rotating member driven in rotation by an internal combustion heat engine, **characterized in that** this method includes:

    - the measurement (70), by means of a method according to any one of the preceding claims, of the modulated pseudo-siren, and
    - the construction (90) of an indicator from the ratio between the measurement and a threshold below which the modulated pseudo-siren is not directly perceptible by human hearing.

**12.** A device for measurement of a modulated pseudo-siren generated in a narrow range of frequencies by a rotating member driven in rotation by an internal combustion heat engine, **characterized in that** this device comprises:

- an acoustic sensor (26) for measuring the ambient noise, and
- a customized calculation unit (36):

- to calculate the power of the noise measured in the reduced range, to calculate the power of the noise measured on a wider range of frequencies including the narrow range, and to calculate a ratio between the powers calculated on the narrow and wide ranges to indicate the emergence of a noise in the narrow range of frequencies,
• to determine, from the amplitude in the narrow range of frequencies, the amplitude of at least one modulation frequency which is a non-integer multiple of an order of the engine and of its harmonics, the amplitude of at least one modulation frequency which is an integer multiple of an order of the first rate of the engine, and
• to construct the measurement of the modulated pseudo-siren from the product of the ratio between the calculated powers by a representative term of the amplitude of the at least one determined modulation frequency.

**13.** A vehicle, **characterized in that** it comprises a measurement device (24) according to Claim 12.

**14.** The vehicle according to Claim 13, in which the acoustic sensor (26) is housed in the interior of the passenger compartment of the vehicle.

Fig. 1

Fig. 2

Fig. 3

Fig. 4

Fig. 5

Fig. 6

**EP 2 526 390 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1050393
- DE 102008027016 A1